# FASCICULE DE BREVET EUROPEEN

(11) **EP 1 687 717 B1**
(45) Date de publication et mention de la délivrance du brevet: **20.10.2010**
(21) Numéro de dépôt: 04805438.1
(22) Date de dépôt: 10.11.2004
(51) Int. Cl.: G06F 21/00, G06F 9/445, G06F 15/177

(54) **DEMARRAGE SECURISE D'UN APPAREIL ELECTRONIQUE A ARCHITECTURE SMP**
GESICHERTES HERAUFFAHREN EINER ELEKTRONISCHEN EINRICHTUNG MIT SMP-ARCHITEKTUR
SECURED START-UP OF AN ELECTRONIC DEVICE HAVING AN SMP ARCHITECTURE

(30) Priorité: 13.11.2003 FR 0313305
(43) Date de publication de la demande: 09.08.2006
(73) Titulaire: STMicroelectronics S.A., 92120 Montrouge (FR)
(72) Inventeur: VOLP, Marcus, 76137 Karlsruhe (DE)
(74) Mandataire: Verdure, Stéphane
(86) Numéro de dépôt international: PCT/FR2004/002897
(87) Numéro de publication internationale: WO 2005/050442

(56) Documents cités:
- FR-A- 2 809 204
- GB-A- 2 281 991
- US-A- 5 904 733
- US-A- 5 961 642
- US-A1- 2003 084 346
- MENEZES ET AL: "Handbook of applied cryptography" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, pages 400-405, XP002143934 ISBN: 0-8493-8523-7

## Description

La présente invention concerne de façon générale la sécurité des appareils électroniques.

Elle trouve des applications, en particulier, dans les appareils électroniques ayant une architecture à plusieurs processeurs symétriques et à mémoire partagée, externe aux processeurs reliés ensemble par au moins un bus de communication. Une telle architecture est connue sous le vocable d'architecture SMP (de l'anglais "Symetric Multi-Processor").

La sécurité, au sens de la présente invention, désigne les aspects de lutte contre le piratage d'un appareil consistant à introduire un circuit pirate ou à faire exécuter un code (programme) pirate dans l'appareil.

Les appareils électroniques visés ici sont des appareils câblés unitaires, c'est-à-dire formés d'un assemblage d'éléments (microprocesseurs, contrôleurs de périphériques, cartes réseau, mémoires,etc.) de composants avec une certaine unité physique et fonctionnelle, par exemple un ordinateur à usage général, un boîtier décodeur ou "Set-Top Box", un assistant numérique personnel ou PDA (de l'anglais "Personal Digital Assistant"), un téléphone portable, ou d'autres produits portables sans fil, etc. La notion d'appareil au sens de la présente invention exclut notamment les systèmes distribués, tels que les systèmes informatiques complexes comprenant plusieurs machines (ordinateurs, serveurs, routeurs, etc.) reliées en réseau ou via l'Internet, qui mettent en oeuvre des techniques de sécurité spécifiques. De même, elle exclut les systèmes entièrement intégrés sur silicium ou SoC (de l'anglais "System-on-Chip"), pour lesquels la sécurité est en général assurée mécaniquement par l'encapsulation ("Sealing", en anglais) dans un boîtier en plastique ou en céramique.

On sait que la sécurité d'un appareil électronique au sens indiqué ci-dessus, peut être gérée, en premier lieu lors du démarrage ("boot", en anglais) de l'appareil. On parle ainsi de démarrage sécurisé de l'appareil.

Selon une première technique, dite technique de démarrage sécurisé incrémental ("Incremental Secure Boot", en anglais), on vérifie l'intégrité de chaque élément matériel et de chaque élément logiciel avant son démarrage c'est-à-dire, respectivement avant son activation ou son exécution. Dit autrement, la mise en service de chaque élément de l'appareil est précédée d'une procédure de validation d'intégrité et/ou d'authentification dudit élément. L'élément peut ensuite être utilisé en confiance par les autres éléments, c'est-à-dire en tant qu'élément considéré comme fiable d'un point de vue sécurité ("trustworthy" en anglais). Le fonctionnement de chaque élément repose ainsi sur des éléments considérés comme fiables formant un domaine sécurisé à l'intérieur de l'appareil. Si l'intégrité d'un élément n'est pas validée ou si son authentification échoue, cet élément n'est pas démarré. Il peut en résulter qu'un service ou une fonction de l'appareil n'est pas assurée. Le brevet américain US 6 263 431 illustre cette technique.

Une seconde technique, dite technique de pistage de démarrage sécurisé ("Secure Boot Tracking", en anglais), se distingue de la précédente en ce qu'elle ne commande pas le processus de démarrage. A la place, elle prévoit de surveiller et de garder la trace de tout élément logiciel qui a été démarré dans l'appareil. On peut ensuite déterminer si un tel élément a été démarré de façon sécurisée en consultant un historique de démarrage qui a été enregistré. Ainsi, les applications s'exécutant dans l'appareil peuvent détecter si les éléments ont été démarrés de façon sécurisée et si par conséquent elles peuvent partager des données sensibles avec eux en toute sécurité. On peut citer la demande de brevet américain US 2003/0074548 à titre d'art antérieur illustrant cette technique.

Dans un appareil à architecture SMP, une pluralité de processeurs sont connectés à une mémoire partagée, via un bus de communication ou tout dispositif d'interconnexion similaire ("crossbar" ou autre). En ce qui concerne le démarrage, la différence fondamentale avec un appareil à processeur unique, est que les codes des OS s'exécutant respectivement dans chaque processeur doivent à un certain niveau synchroniser leur procédure de démarrage.

Avec les processeurs Pentium® et Itanium® de Intel Corporation, tous les processeurs de l'appareil sont mis sous tension en même temps lorsque l'appareil est mis sous tension. Après la réalisation d'un test automatique de mise sous tension ou POST ("Power-on Self Test" en anglais) et le démarrage de certains éléments matériels internes, les processeurs se synchronisent en utilisant le bus mémoire en sorte qu'un processeur déterminé, appelé processeur de démarrage ou BSP (de l'anglais "BootStrap Processor") continue le démarrage de son OS alors que les autres processeurs, appelés processeurs d'application ou APs (de l'anglais "Application Processor"), attendent la réception d'un signal de démarrage ou signal de mise en liaison (en anglais "Handshake") pour continuer leur procédure de démarrage. Ce signal de démarrage est typiquement déclenché par un code de démarrage d'OS (en anglais "OS Startup Code") du BSP après l'initialisation des tables de processeur qui sont requises par l'OS (par ex. les tables d'interruption et les pages de tables mémoire pour activer la mémoire virtuelle). Avec ce signal de démarrage, une adresse mémoire est envoyée, laquelle indique une page de la mémoire partagée à partir de laquelle les APs sont censés reprendre leur procédure de démarrage.

Un protocole similaire est divulgué dans le brevet américain 6 012 142, qui prévoit en outre qu'un signal est envoyé de processeur en processeur pour leur signaler que c'est à leur tour de démarrer.

D'autres approches ont été proposées dans les brevets américains 6 400 717 et 6 347 372, qui prévoient tous les deux l'ajout dans le système d'un circuit dédié, lequel fournit un signal de démarrage aux processeurs individuellement, et un à la fois. En plus de cela, le brevet américain 6 347 372 précité réserve le bus mémoire pour le processeur qui est en train de démarrer, afin d'accélérer la procédure de démarrage.

La demande de brevet américain 2003/0084346 divulgue un procédé de démarrage sécurisé d'un environnement multiprocesseur comprenant le démarrage d'un processeur initiateur, lequel émet une instruction permettant d'établir une zone de mémoire partagée sécurisée pour l'ensemble des processeurs du système. Le processeur initiateur charge ensuite un système d'exploitation sécurisé dans la zone de mémoire partagée et émet une commande de réinitialisation ("RESET") à une pluralité de processeurs. Enfin, il permet à ces processeurs l'accès en lecture/écriture à la zone de mémoire partagée sécurisée et l'exécution du système d'exploitation sécurisé.

L'invention a pour objet de proposer une alternative aux procédures de démarrage présentées ci-dessus.

L'invention propose ainsi un procédé de démarrage sécurisé d'un appareil électronique comprenant plusieurs processeurs et une mémoire partagée externe reliés par au moins un bus de communication, chaque processeur ayant des éléments matériels et un empilement d'éléments logiciels pouvant s'exécuter sur lesdits éléments matériels. Le procédé comprend :
a) le démarrage sécurisé d'un premier desdits processeurs, jusqu'à mais non y compris un élément logiciel correspondant à un système d'exploitation ;
b) la protection, par ledit premier processeur, d'une partie de la mémoire partagée, de manière à former un domaine sécurisé constitué dudit premier processeur et de ladite protégée partie de la mémoire partagée ;
c) le démarrage du système d'exploitation dudit premier processeur, avec stockage de données dudit système d'exploitation dans ladite partie protégée de la mémoire partagée ;
d) le démarrage sécurisé d'un second desdits processeurs, jusqu'à mais non y compris un élément logiciel correspondant à un système d'exploitation ; puis
e) l'authentification du second processeur auprès du premier processeur et réciproquement, et, en cas d'authentifications réussies,
f) l'extension du domaine sécurisé audit second processeur, via la fourniture par ledit premier processeur audit second processeur, d'un droit d'accès en écriture à ladite partie protégée de la mémoire partagée ; puis
g) le démarrage du système d'exploitation dudit second processeur, avec stockage de données dudit système d'exploitation dans ladite partie protégée de la mémoire partagée.

Dans un mode de mise en oeuvre, l'authentification réciproque du premier processeur et du second processeur est réalisée par un élément logiciel du premier processeur correspondant à un gestionnaire d'authentification.

Le premier processeur peut être sélectionné parmi les processeurs de l'appareil, par un élément logiciel correspondant à un code d'amorçage qui est chargé dans une RAM interne des processeurs depuis une ROM externe.

Notamment dans le cas des processeurs de Intel Corporation, les processeurs autres que le premier processeur peuvent interrompre leur séquence de démarrage avant le démarrage de leur système d'exploitation, jusqu'à recevoir un signal de démarrage qui est émis par le premier processeur seulement après l'installation de l'élément logiciel correspondant au gestionnaire d'authentification, puis reprennent leur séquence de démarrage, de préférence à partir de l'endroit où elle s'était arrêtée.

Dans un exemple de mise en oeuvre du procédé selon l'invention, le code correspondant au gestionnaire d'authentification met en oeuvre un algorithme d'authentification asymétrique.

De plus, la protection de la partie de la mémoire partagée peut être effectuée par un élément logiciel du premier processeur, correspondant par exemple à un code de démarrage de système d'exploitation, en affectant exclusivement audit premier processeur le droit d'accès en écriture à la partie protégée de la mémoire partagée et le droit de modification des droits d'accès à la mémoire partagée, et en affectant de préférence le droit d'accès en lecture à l'ensemble de la mémoire partagée à tous les processeurs.

Notamment pour les processeurs de Intel Corporation, l'étape a) et l'étape d) peuvent s'effectuer substantiellement en parallèle.

En variante, l'étape d) ne débute qu'après l'étape c), c'est-à-dire seulement après la fin du démarrage du premier processeur.

En particulier, à l'étape c) et/ou à l'étape g), les données stockées dans la partie protégée de la mémoire partagée comprennent des tables de processeur utilisées par le système d'exploitation, respectivement du premier processeur et du second processeur.

Un deuxième aspect de l'invention propose un processeur comprenant des moyens pour la mise en oeuvre d'un procédé selon le premier aspect tel que défini ci-dessus.

Un troisième aspect de l'invention concerne un appareil électronique comprenant une pluralité de processeurs selon le deuxième aspect, reliés à une mémoire partagée par au moins un bus de communication. Des exemples de tels appareils ont été donnés en introduction.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma bloc illustrant un exemple d'appareil électronique à architecture SMP auquel peut s'appliquer la présente invention ;
- la figure 2 est une représentation schématique d'un exemple d'empilement d'éléments logiciels pouvant s'exécuter dans un appareil électronique ; et,
- la figure 3 est un diagramme d'étapes illustrant les étapes d'un exemple de procédé de démarrage selon l'invention.

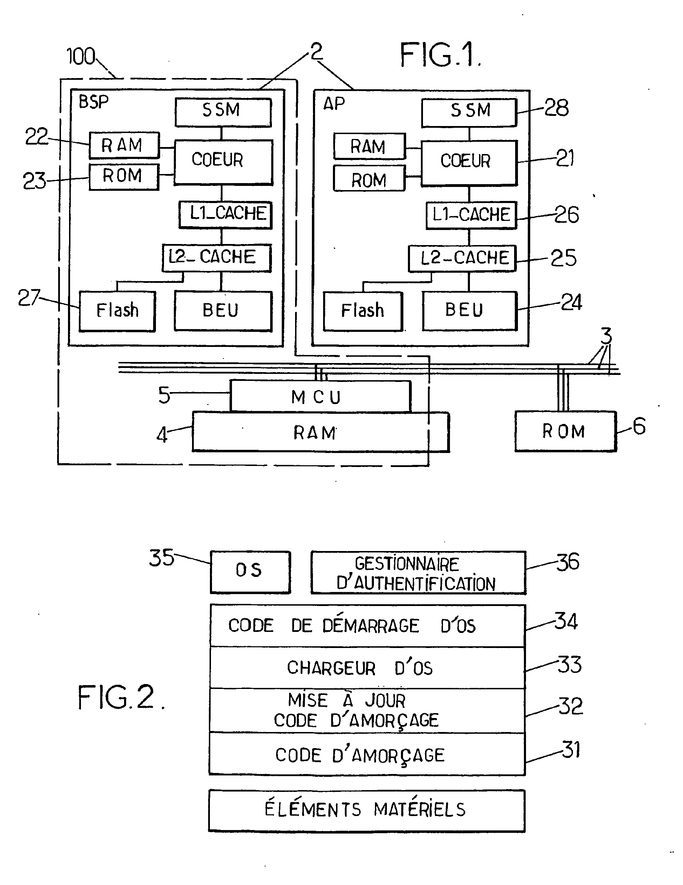

La figure 1 montre un exemple d'appareil électronique auquel peut s'appliquer le procédé selon la présente invention.

L'appareil comprend au moins deux processeurs 2 qui sont structurellement identiques, et qui sont reliés par l'intermédiaire d'au moins un bus de communication 3. Une mémoire principale 4 est aussi reliée au bus 3 par l'intermédiaire d'une unité de contrôle d'accès à la mémoire ou MCU (de l'anglais "Memory Control Unit"). La mémoire 4 est une mémoire volatile à accès aléatoire ou RAM (de l'anglais "Random Access Memory"). La mémoire 4 est dite externe en ce sens qu'elle est externe aux processeurs 2. De plus, elle est dite partagée en ce sens qu'elle est destinée à être accédée en lecture et/ou en écriture par certains ou la totalité des processeurs 2. La gestion du droit d'accès en écriture et du droit d'accès en lecture à la mémoire 4 est effectuée grâce à la MCU 5. L'architecture décrite ci-dessus est dite SMP en ce sens que l'appareil électronique comprend plusieurs processeurs et une mémoire partagée 4, externe aux processeurs, reliés ensemble par le ou les bus 3.

Une mémoire à lecture seule 6 externe ou ROM (de l'anglais "Read Only Memory") est également reliée aux bus 3 et peut être lue par les processeurs 2.

Une autre mémoire non volatile, à savoir une mémoire Flash 7, est aussi reliée aux bus 3. Il s'agit par exemple d'une mémoire Flash-EEPROM. Elle contient, le cas échéant, une mise à jour des codes d'amorçage des processeurs.

Les processeurs présentent chacun la même structure, c'est-à-dire les mêmes éléments matériels, bien que l'un des processeurs appelé processeur d'amorce, joue un rôle particulier lors du démarrage de l'appareil ainsi qu'il sera vu plus loin. On va maintenant décrire les principaux éléments matériels qui sont compris dans chaque processeur.

Un processeur 2 comprend tout d'abord un coeur de processeur 21. Il comprend aussi une RAM interne 22 dans laquelle sont chargés les éléments logiciels exécutés par le processeur avant que soit réalisée une protection de la mémoire partagée 4. Cette RAM interne 22 n'est accessible que par le coeur 21. En particulier, elle n'est pas reliée à un bus mémoire ni à une mémoire cache. Il s'ensuit qu'elle est protégée contre les attaques matérielles connues qui sont les plus faciles à mettre en oeuvre (par exemple par "espionnage" du bus). En ce sens, la RAM interne 22 est dite sécurisée.

Il en va de même pour une ROM interne 23 du processeur 2, qui contient la "racine de confiance" (en anglais "root of trust") de l'appareil. Cette ROM contient en effet un code ayant pour fonction d'authentifier le premier code d'amorçage lu par le processeur dans la ROM externe 6. L'intégrité de la ROM interne 23 peut être validée lors du démarrage du processeur par une fonctionnalité de BIST (de l'anglais "Built-in-Self-Test").

La protection de la RAM interne 22 et de la ROM interne 23 peut en outre être renforcée par des moyens supplémentaires pour éviter des attaques matérielles, par exemple par encapsulation dans un boîtier en céramique.

Chaque processeur comprend en outre une unité 24 de chiffrement ou cryptage de bus, ou BEU (de l'anglais "Bus Encryption Unit"). L'unité 24 relie le processeur aux bus 3. En particulier, elle est reliée au coeur 21 via une mémoire cache de second niveau 25 et une mémoire cache de premier niveau 26. L'unité 24 a pour fonction de chiffrer toutes les données qui sont placées par le processeur sur le bus 3, notamment les données à écrire dans la mémoire externe 4, et de déchiffrer ces données lorsqu'elles sont lues à nouveau dans la mémoire externe 4 pour être délivrées au coeur de processeur 21 via les mémoires cache 25 et 26. Pour assurer ces fonctions de chiffrement et de déchiffrement, l'unité 24 utilise une clé dite clé de BEU dans la suite.

Chaque processeur 2 comprend encore une autre mémoire à lecture seule 27 interne, par exemple une mémoire Flash-EEPROM. La mémoire 27 a pour but de stocker, le cas échéant des paramètres propres à chaque processeur, selon les besoins de l'application. La mémoire 27 est reliée au coeur de processeur 21 via les mémoires cache 25 et 26.

Enfin, chaque processeur comprend une machine d'états de sécurité 28 ou SSM (de l'anglais "Security State Machine"). La machine 28 a pour fonction de protéger le mode sécurisé du processeur, et notamment de protéger la RAM interne 22 contre les éventuelles tentatives de piratage. A cet effet, la machine 28 surveille l'entrée de toute séquence de code à destination de la RAM interne 22, et s'assure qu'un code dont l'intégrité n'est pas validée n'est pas capable de modifier le contenu de la RAM interne 22. Tout code qui est chargé dans la RAM interne 22 devant être authentifié au préalable, la machine d'état 28 a également pour fonction d'enregistrer un historique de démarrage et d'authentifier cet historique de démarrage auprès des autres processeurs à la demande.

La figure 2 illustre un exemple d'empilement d'éléments logiciels ou couches logicielles pouvant être traité par les éléments matériels de chaque processeur qui ont été présentés ci-dessus.

Un premier élément logiciel 31 est un code d'amorçage (en anglais "Boot Code") qui est lu dans la ROM externe 6 et qui est authentifié par la ROM interne 23 avant d'être chargé dans la RAM interne 22 pour exécution par le coeur de processeur 21. Le code 31 repose sur les éléments matériels du processeur 2.

Au dessus du code d'amorçage 31 on trouve un deuxième élément logiciel 32 correspondant, le cas échéant, à une mise à jour du code d'amorçage (en anglais "Boot Code Update"). La mise à jour 32 est lue dans la mémoire Flash externe 7 par le coeur de processeur 21 à travers la BEU 24 et les mémoires cache 25-26, et est chargée dans la RAM interne 22. Au dessus de l'élément logiciel 32, il s'exécute un troisième élément logiciel 33 appelé chargeur de système d'exploitation ou plus simplement chargeur d'OS (en anglais "OS Loader"). Ce code a pour fonction, lorsqu'il est chargé dans la RAM interne 22 et exécuté par le coeur de processeur 21, de commander le chargement dans la mémoire 22 d'un quatrième élément logiciel 34, à savoir un code de démarrage de système d'exploitation ou plus simplement code de démarrage d'OS (en anglais "OS startup code").

Le code 34 a quant à lui pour fonction principale de démarrer l'OS du processeur et au préalable d'initialiser les tables du processeur telles que les tables de pages mémoire, la table de vecteurs d'interruption, etc. Dans un mode de mise en oeuvre de l'invention, d'autres fonctions sont attribuées au code 34 de démarrage d'OS, ainsi qu'il sera explicité plus loin.

L'OS du processeur est un cinquième élément logiciel 35 qui s'exécute au dessus de l'élément précédent 34. Il en va de même d'un autre élément logiciel 36 qui est un code particulier implémentant un gestionnaire d'authentification. Le gestionnaire d'authentification 36 a pour fonction, lorsqu'il est installé par le code 34 de démarrage d'OS dans la mémoire RAM externe 4 et exécuté par le coeur de processeur 21, de gérer l'authentification des processeurs l'un envers l'autre.

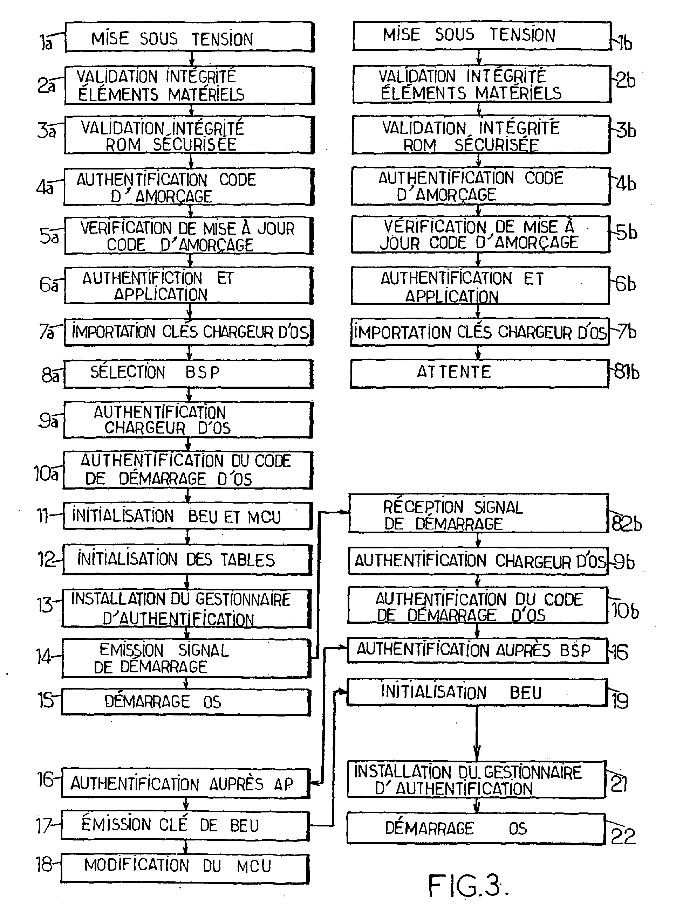

Les éléments logiciels 31 à 36 sont démarrés selon un procédé de démarrage sécurisé incrémental, dans la mesure où ils sont démarrés chacun par l'élément sous-jacent dans l'empilement une fois que ce dernier a validé leur intégrité ou les a authentifié. Ce procédé va maintenant être décrit en détail en regard du diagramme d'étapes de la figure 3.

On peut noter que, dans un mode de mise en oeuvre, les éléments 31-34 et 36 font l'objet d'un enregistrement dans l'historique de démarrage qui est tenu à jour par la machine d'états 28.

A la figure 3, on a illustré de façon schématique les étapes d'un exemple de procédé de démarrage selon l'invention qui sont mises en oeuvre dans un premier processeur, dit processeur d'amorçage ou BSP (en anglais "BootStrap Processor"), et dans un second processeur dit processeur d'application ou AP (en anglais "Application Processor"), respectivement en partie gauche et en partie droite de la figure. Certaines étapes sont identiques pour le BSP et l'AP en sorte qu'elles sont désignées par une référence constituée d'un même nombre suivi respectivement de la lettre "a" pour le BSP de la lettre "b" pour l'AP. par exemple dès la mise sous tension de l'appareil.

Ainsi, dans une première étape 1 a ou 1b, les processeurs 2 sont mis sous tension.

Dans une deuxième étape 2a ou 2b, il est mis en oeuvre un test automatique de mise sous tension, ou POST (de l'anglais "Power-on Self Test"), qui a pour fonction de valider l'intégrité des éléments matériels des processeurs.

Dans une troisième étape 3a ou 3b, on valide l'intégrité de la ROM interne 23 des processeurs au moyen d'une fonctionnalité de BIST.

Dans une quatrième étape 4a ou 4b, la ROM interne 23 authentifie le code d'amorçage 31 qui est lu dans la ROM externe 6. En cas d'authentification réussie, le code d'amorçage est chargé dans la RAM interne 22 pour être exécuté par le coeur de processeur 21.

Dans une cinquième étape 5a ou 5b, le code d'amorçage 31 vérifie la présence éventuelle d'une mise à jour du code d'amorçage 32 dans la mémoire Flash externe 7. Dans l'affirmative, le code d'amorçage 31 authentifie la mise à jour 32 et l'applique en mettant à jour le contenu de la RAM interne 22 dans une étape 6a ou 6b.

Dans une septième étape 7a ou 7b, le code d'amorçage 31, éventuellement mis à jour comme indiqué ci-dessus, importe les clés du chargeur d'OS.

Les sept premières étapes ci-dessus sont identiques à celles mises en oeuvre lors du démarrage d'un appareil électronique comprenant un unique processeur. Les étapes 1a-7a d'une part, et 1b-7b d'autre part peuvent être mises en oeuvre quasi simultanément, c'est-à-dire substantiellement en parallèle, respectivement pour le BSP et pour l'AP, ou non.

Pour certains autres processeurs, par exemple les processeurs de Intel Corporation tel que le Pentium® ou l'Itanium®, celui des processeurs 2 de l'appareil électronique qui fonctionne en tant que BSP n'est pas déterminé à l'avance. C'est pourquoi, le code d'amorçage 31 de l'un des processeurs 2 de l'appareil électronique sélectionne ledit processeur dans une étape 8a pour qu'il devienne le BSP. Le BSP peut alors poursuivre sa procédure de démarrage, alors que l'autre ou les autres processeurs, à savoir le ou les APs, entrent dans une phase d'attente 81 b.

Dans une étape 9a, le code d'amorçage 31 du BSP authentifie le chargeur d'OS 33.

En cas d'authentification réussie, le chargeur d'OS 33 du BSP est chargé dans la RAM interne 22 et exécuté par le coeur 21. Il authentifie, dans une étape 10a, le code de démarrage d'OS 34 du BSP.

Les étapes 9a et 10a ont une contrepartie du coté des APs, ainsi qu'il sera vu plus loin, mais ces étapes correspondantes 9b et 10b sont mises en oeuvre dans un AP après que celui-ci ait reçu un signal de démarrage ou signal de mise en liaison (en anglais "handshake signal"). Concernant à nouveau le BSP, et en cas d'authentification réussie du code de démarrage d'OS à l'étape 10a, ce dernier est chargé dans la RAM interne 22 et exécuté dans le coeur 21.

Il effectue, dans une étape 11, l'initialisation de la MCU. Cette étape 11 a pour fonction de protéger une partie de la RAM externe 4. Cette protection a lieu en configurant la MCU en sorte de donner au BSP un droit exclusif d'écriture dans ladite partie de la RAM externe 4. Le droit d'accès en lecture à la partie protégée de la RAM externe 4 peut être donné à tous les processeurs, c'est-à-dire au BSP et aux APs. En outre, la MCU est également configurée en sorte de réserver au BSP l'exclusivité du droit de modification des droits d'accès à la partie protégée de la RAM externe 4. Les dimensions (limites) de la partie protégée de la RAM externe 4 sont également définies par configuration de la MCU. La protection de la RAM externe 4 peut être mise en oeuvre à l'aide d'un masque approprié ("wildcard mask" en anglais).

Les éléments matériels et logiciels du BSP qui sont déjà démarrés ainsi que la partie protégée de la RAM externe 4, forment alors un domaine sécurisé de l'appareil. Ce domaine est représenté en traits discontinus sur le schéma de la figure 1. Le reste de la RAM externe 4, c'est-à-dire l'espace mémoire (non protégé à l'étape 11) qui n'appartient pas au domaine sécurisé 100, reste disponible pour la communication non sécurisée entre le BSP et les APs, ou entre les APs.

Dans un mode de mise en oeuvre avantageux, l'étape 11 comprend également l'initialisation et l'activation de la BEU du BSP, de manière à mettre en oeuvre le chiffrement des données échangées entre le BSP et la mémoire externe 4 via les bus de communication 3.

Dans une étape suivante 12, le code de démarrage d'OS 34 du BSP initialise les tables de processeur dans la partie protégée de la RAM externe 4. Ces tables comprennent en particulier la table de pages mémoire et la table de vecteurs d'interruption qui seront utilisées par l'OS du BSP. Dit autrement, des données de l'OS du BSP sont chargées dans la partie protégée de la RAM externe 4.

Ensuite, l'OS 35 du BSP peut être démarré, ce qui intervient dans une étape 15. Dans le mode de mise en oeuvre représenté à la figure 3, un code correspondant au gestionnaire d'authentification 36 est préalablement installé dans la partie protégée de la RAM externe 4 par le code de démarrage d'OS 34, afin de permettre l'authentification des autres APs. Le gestionnaire d'authentification scrute les requêtes d'authentification émises par les APs.

De plus, dans une étape 14, le code de démarrage d'OS 34 du BSP émet un signal de démarrage à destination d'un autre processeur, à savoir l'AP dont le démarrage est illustré par les étapes représentées en partie droite de la figure 3.

On notera que l'ordre des étapes 13, 14, 15 peut être bouleversé dès lors que l'étape 13 est mise en oeuvre après l'étape 11 et que l'étape 15 est mise en oeuvre après les étapes 11 et 12. On prévoit dans l'exemple considéré ici que le signal de démarrage est émis par le code de démarrage d'OS à l'étape 14, mais on pourrait aussi prévoir qu'il soit émis par l'OS lui-même après qu'il ait été démarré.

Après que l'AP ait reçu le signal de démarrage dans une étape 82b, il effectue les étapes 9b et 10b déjà commentées plus haut. On notera que, avec des processeurs de Intel Corporation tels que le Pentium® ou l'Itanium®, le démarrage des APs ne reprend qu'à partir d'une adresse dans la mémoire partagée (transmise avec le signal de démarrage) qui pointe dans la partie sécurisée.

Ensuite, dans une étape 16, le BSP s'authentifie auprès de l'AP et, réciproquement, l'AP s'authentifie auprès du BSP. Cette étape d'authentification mutuelle est gérée par le gestionnaire d'authentification 36 du BSP. Elles peuvent mettre en oeuvre un algorithme d'authentification asymétrique, connu en soi. Pour chaque requête d'authentification (i.e., requête d'authentification de l'AP par le BSP et requête d'authentification du BSP émise l'AP), l'authentification porte sur le processeur lui-même, sur l'historique de démarrage généré par la SSM du processeur, et sur le code qui a produit la requête d'authentification.

En cas d'authentification réussie, le BSP émet sa clé de BEU à l'AP dans une étape 18. Dans une étape 19, l'AP initialise alors sa BEU avec la clé ainsi reçue. De cette manière, on s'assure que le BSP et la BEU peuvent s'échanger des données par lecture et écriture dans la RAM externe 4. L'étape 18 est aussi mise en oeuvre sous la commande du gestionnaire d'authentification 35 du BSP.

Les droits d'accès à la partie protégée de la RAM externe 4 sont modifiés, par une reconfiguration appropriée 20 de la MCU. L'étape 20 est elle encore mise en oeuvre par le gestionnaire d'authentification 35 du BSP.

Ensuite, l'AP procède à l'installation 21 d'une instance du gestionnaire d'authentification 35, afin de pouvoir à son tour authentifier d'autres processeurs, le cas échéant. Ainsi, le BSP ou l'AP peut ensuite insérer d'autres processeurs (c'est-à-dire d'autres APs) dans le domaine sécurisé de l'appareil.

Enfin, dans une étape 22, le code de démarrage d'OS de l'AP démarre l'OS de l'AP. L'étape 22 comprend l'initialisation dans la partie sécurisée de la RAM externe 4 des tables de processeur utilisées par l'OS de l'AP. Dit autrement, des données de l'OS sont stockées dans la partie protégée de la mémoire partagée 4.

L'invention a été décrite ci-dessus dans un mode de mise en oeuvre préféré mais non limitatif. En particulier, la sélection du BSP à l'étape 8a, l'attente de l'AP à l'étape 8b et l'émission du signal de démarrage par le BSP à l'étape 14 sont utiles lorsque les processeurs sont des processeurs de Intel Corporation tels que le Pentium® et l'Itanium®. On notera en outre que l'adresse de reprise ("resume address") qui peut être utilisée pour indiquer le code à utiliser pour achever le démarrage de l'OS de l'AP à l'étape 22, est de préférence émise non pas avec le signal de démarrage à l'étape 14, mais après l'étape 20 à laquelle l'AP entre dans le domaine sécurisé. De cette façon l'adresse de reprise est transmise via la RAM externe 4 de façon sécurisée, et ne peut donc pas être modifiée lors de sa transmission afin de faire reprendre le démarrage de l'AP à partir d'une autre adresse, dans laquelle un code pirate serait introduit.

Avec d'autres processeurs que ceux précités de Intel Corporation, on peut sauter les étapes 8a, 8b et 14.

On peut aussi appliquer l'invention à une procédure de démarrage telle que celles décrites dans les brevets américains 6 347 372 et 6 400 717 présentés en introduction. Dans ce cas, l'AP commence sa séquence de démarrage avec la première étape 1b exécutée après la dernière étape 20 de la séquence de démarrage du BSP. De plus, on saute les étapes 8a, 8b et 14. l'AP peut directement continuer sa séquence de démarrage et s'authentifier auprès du gestionnaire d'authentification du BSP qui a été installé au cours du démarrage sécurisé du BSP.

On notera en outre qu'un démarrage sécurisé tel que défini au paragraphe précédent s'applique aussi en cas d'ajout en cours de fonctionnement ("hot plugging" en anglais) d'un processeur dans l'appareil lorsqu'il est déjà démarré. Dans ce cas, les processeurs déjà démarrés fonctionnent déjà alors que le processeur ajouté est démarré. Ce dernier peut alors aussi sauter l'étape 8b et n'a pas besoin de la réception du signal de démarrage.

## Revendications

1. Procédé de démarrage sécurisé d'un appareil électronique comprenant plusieurs processeurs (2) et une mémoire partagée (4) externe reliés par au moins un bus de communication (3), chaque processeur ayant des éléments matériels et un empilement d'éléments logiciels pouvant s'exécuter sur lesdits éléments matériels, le procédé comprenant :
a) le démarrage sécurisé (1a-7a) d'un premier (BSP) desdits processeurs, jusqu'à mais non y compris un élément logiciel correspondant à un système d'exploitation (35) ;
b) la protection (11), par ledit premier processeur, d'une partie de la mémoire partagée, de manière à former un domaine sécurisé (100) constitué dudit premier processeur et de ladite partie protégée de la mémoire partagée ;
c) le démarrage (15) du système d'exploitation dudit premier processeur, avec stockage (12) de données dudit système d'exploitation dans ladite partie protégée de la mémoire partagée ;
d) le démarrage sécurisé d'un second (AP) desdits processeurs, jusqu'à mais non y compris un élément logiciel correspondant à un système d'exploitation (35) ; le procédé étant **caractérisé par** les étapes suivantes ayant lieu après l'etape d):
e) l'authentification (16) du second processeur auprès du premier processeur et réciproquement, et, en cas d'authentifications réussies,
f) l'extension (20) du domaine sécurisé audit second processeur, via la fourniture par ledit premier processeur audit second processeur, d'un droit d'accès en écriture dans ladite partie protégée de la mémoire partagée ; puis
g) le démarrage (22) du système d'exploitation dudit second processeur, avec stockage de données dudit système d'exploitation dans ladite partie protégée de la mémoire partagée.

2. Procédé selon la revendication 1, suivant lequel l'authentification réciproque du premier processeur et du second processeur est réalisée par un élément logiciel du premier processeur correspondant à un gestionnaire d'authentification (36).

3. Procédé selon la revendication 1 ou la revendication 2, suivant lequel le premier processeur est sélectionné parmi les processeurs de l'appareil, par un élément logiciel correspondant à un code d'amorçage (31) qui est chargé dans une RAM interne (22) des processeurs depuis une ROM externe (6).

4. Procédé selon les revendications 2 et 3, suivant lequel les processeurs autres que le premier processeur interrompent leur séquence de démarrage avant le démarrage de leur système d'exploitation, jusqu'à recevoir du premier processeur un signal de démarrage qui est émis par le premier processeur seulement après l'installation de l'élément logiciel correspondant au gestionnaire d'authentification, puis reprennent leur séquence de démarrage.

5. Procédé selon l'une quelconque des revendications 2 à 4, suivant lequel le code correspondant au gestionnaire d'authentification met en oeuvre un algorithme d'authentification à clé publique et à clé privée.

6. Procédé selon l'une quelconque des revendications précédentes, suivant lequel la protection de la partie de la mémoire partagée est effectuée par un élément logiciel du premier processeur, en affectant exclusivement audit premier processeur le droit d'accès en écriture à la partie protégée de la mémoire partagée et le droit de modification des droits d'accès à la mémoire partagée.

7. Procédé selon l'une quelconque des revendications 1 à 6, suivant lequel l'étape a) et l'étape d) s'effectuent substantiellement en parallèle.

8. Procédé selon l'une quelconque des revendications 1 à 6, suivant lequel l'étape d) ne débute qu'après l'étape c).

9. Procédé selon l'une quelconque des revendications précédentes, suivant lequel, à l'étape c) et/ou à l'étape g), les données stockées dans la partie protégée de la mémoire partagée comprennent des tables de processeur utilisées par le système d'exploitation, respectivement du premier processeur et du second processeur.

10. Processeur comprenant des moyens pour la mise en oeuvre d'un procédé selon l'une quelconque des revendications précédentes.

11. Appareil électronique comprenant une pluralité de processeurs (2) selon la revendication 10 reliés à une mémoire partagée (4) par au moins un bus de communication (3).

## Claims

1. Method of secure booting of an electronic apparatus comprising several processors (2) and an external shared memory (4) that are linked by at least one communication bus (3), each processor having hardware elements and a stack of software elements that can execute on said hardware elements, the method comprising:
a) the secure booting (1a-7a) of a first (BSP) of said processors, up to but not including a software element corresponding to an operating system (35);
b) the protection (11), by said first processor, of a part of the shared memory, in such a way as to form a secure domain (100) consisting of said first processor and of said protected part of the shared memory;
c) the booting (15) of the operating system of said first processor, with storage (12) of data of said operating system in said protected part of the shared memory;
d) the secure booting of a second (AP) of said processors, up to but not including a software element corresponding to an operating system (35); the method being **characterized by** the following steps, carried out after step d);
e) the authentication (16) of the second processor with the first processor and vice versa, and, in case of successful authentications,
f) the extension (20) of the secure domain to the said second processor, through the provision by said first processor to said second processor, of a write-access entitlement to said protected part of the shared memory; then
g) the booting (22) of the operating system of said second processor, with storage of data of said operating system in said protected part of the shared memory.

2. Method according to Claim 1, wherein the reciprocal authentication of the first processor and of the second processor is carried out by a software element of the first processor corresponding to an authentication manager (36).

3. Method according to Claim 1 or Claim 2, wherein the first processor is selected from among the processors of the apparatus, by a software element corresponding to a boot code (31) which is loaded into an internal RAM (22) of the processors from an external ROM (6).

4. Method according to Claims 2 and 3, wherein the processors other than the first processor interrupt their boot sequence before the booting of their operating system, until the reception from the first processor of a boot signal which is emitted by the first processor only after the installation of the software element corresponding to the authentication manager, then resume their boot sequence.

5. Method according to any one of Claims 2 to 4, wherein the code corresponding to the authentication manager implements a public key and private key authentication algorithm.

6. Method according to any one of the preceding claims, wherein the protection of the part of the shared memory is performed by a software element of the first processor, by assigning the write-access entitlement to the protected part of the shared memory and the entitlement of modification of the access entitlements to the shared memory exclusively to the said first processor.

7. Method according to any one of Claims 1 to 6, wherein step a) and step d) are performed substantially in parallel.

8. Method according to any one of Claims 1 to 6, wherein step d) begins only after step c).

9. Method according to any one of the preceding claims, wherein, in step c) and/or step g), the data stored in the protected part of the shared memory comprise processor tables used by the operating system, respectively of the first processor and of the second processor.

10. Processor comprising means for the implementation of a method according to any one of the preceding claims.

11. Electronic apparatus comprising a plurality of processors (2) according to Claim 10 linked to a shared memory (4) by at least one communication bus (3).

## Patentansprüche

1. Verfahren zum gesicherten Hochfahren einer elektronischen Vorrichtung mit mehreren Prozessoren (2) und einem externen geteilten Speicher (4), die durch zumindest einen Kommunikationsbus (3) miteinander verbunden sind, wobei jeder Prozessor Hardwareelemente und einen auf den Hardwareelementen ausführbaren Stapel von Softwareelementen aufweist, mit den folgenden Schritten:
a) Gesichertes Hochfahren (1a-7a) eines ersten (BSP) der Prozessoren, bis zu, aber nicht mehr ein Softwareelement enthaltend, das einem Betriebssystem (35) entspricht;
b) Sichern (11) eines Teils des geteilten Speichers durch den ersten Prozessor in der Weise, dass ein gesicherter Bereich (100) gebildet wird, der aus dem ersten Prozessor und dem geschützten Teil des geteilten Speichers besteht;
c) Hochfahren (15) des Betriebssystems des ersten Prozessors mit einem Speichern (12) von Daten des Betriebssystems in den geschützten Teil des geteilten Speichers;
d) Gesichertes Hochfahren eines zweiten (AP) der Prozessoren, bis zu, aber nicht mehr ein Softwareelement enthaltend, das einem Betriebssystem (35) entspricht;
**gekennzeichnet durch** die folgenden Schritte, die nach Schritt d) stattfinden:
e) Authentifizieren (16) des zweiten Prozessors in der Nähe des ersten Prozessors und umgekehrt, und für den Fall, dass die Authentifizierungen erfolgreich sind,
f) Erweitern (20) des gesicherten Bereichs auf den zweiten Prozessor über die Lieferung eines Zugriffsrechts zum Schreiben in den geschützten Teil des geteilten Speichers **durch** den ersten Prozessor an den zweiten Prozessor; dann
g) Hochfahren (22) des Betriebssystems des zweiten Prozessors mit einem Speichern von Daten des Betriebssystems in den geschützten Teil des geteilten Speichers.

2. Verfahren nach Anspruch 1, wobei die wechselseitige Authentifizierung des ersten Prozessors und des zweiten Prozessors durch ein Softwareelement des ersten Prozessors realisiert wird, das einem Verwalter einer Authentifizierung (36) entspricht.

3. Verfahren nach Anspruch 1 oder 2, wobei der erste Prozessor unter den Prozessoren der Vorrichtung durch ein Softwareelement ausgewählt wird, das einem Bootcode (31) entspricht, der in einen internen RAM (22) der Prozessoren von einem externen ROM (6) geladen wird.

4. Verfahren nach Ansprüchen 2 und 3, wobei die anderen Prozessoren als der erste Prozessor ihre Hochfahrsequenz vor dem Hochfahren ihres Betriebssystems unterbrechen, bis ein Hochfahrsignal des ersten Prozessors empfangen wird, das durch den ersten Prozessor nur nach der Installation des Softwareelements, das dem Verwalter einer Authentifizierung entspricht, ausgegeben wird, und dann ihre Hochfahrsequenz wieder aufnehmen.

5. Verfahren nach einem der Ansprüche 2 bis 4, wobei der Code, der dem Verwalter einer Authentifizierung entspricht, einen Authentifizierungsalgorithmus mit einem öffentlichen Schlüssel und mit einem privaten Schlüssel durchführt.

6. Verfahren nach einem der vorstehenden Ansprüche, wobei der Schutz des Teils des geteilten Speichers durch ein Softwareelement des ersten Prozessors bewirkt wird, indem dem ersten Prozessor das Zugriffsrecht zum Schreiben in den geschützten Teil des geteilten Speichers und das Recht zum Modifizieren von Zugriffsrechten auf den geteilten Speicher exklusiv zugewiesen wird.

7. Verfahren nach einem der Ansprüche 1 bis 6, wobei der Schritt a) und der Schritt d) im Wesentlichen parallel bewirkt werden.

8. Verfahren nach einem der Ansprüche 1 bis 6, wobei der Schritt d) nicht vor dem Schritt c) beginnt.

9. Verfahren nach einem der vorstehenden Ansprüche, wobei im Schritt c) und/oder im Schritt g) die in dem geschützten Teil des geteilten Speichers gespeicherten Daten durch das Betriebssystem verwendete Prozessortabellen entsprechend dem ersten Prozessor und dem zweiten Prozessor aufweisen.

10. Prozessor mit Einrichtungen zum Durchführen eines Verfahrens nach einem der vorstehenden Ansprüche.

11. Elektronische Vorrichtung mit einer Vielzahl von Prozessoren (2) nach Anspruch 10, die durch zumindest einen Kommunikationsbus (3) mit einem geteilten Speicher (4) verbunden ist.
